(19) Europäisches Patentamt
European Patent Office
Office européen des brevets

(11) Veröffentlichungsnummer: **0 336 159**
**A1**

# (12) EUROPÄISCHE PATENTANMELDUNG

(21) Anmeldenummer: 89104654.2

(22) Anmeldetag: 16.03.89

(51) Int. Cl.[4]: C08G 65/40 , C08G 75/23

(30) Priorität: 25.03.88 DE 3810106

(43) Veröffentlichungstag der Anmeldung:
11.10.89 Patentblatt 89/41

(84) Benannte Vertragsstaaten:
BE DE FR GB NL

(71) Anmelder: **BASF Aktiengesellschaft**
**Carl-Bosch-Strasse 38**
**D-6700 Ludwigshafen(DE)**

(72) Erfinder: **Hedtmann-Rein, Carola, Dr.**
**Maxdorfer Strasse 55**
**D-6700 Ludwigshafen(DE)**
Erfinder: **Heinz, Gerhard, Dr.**
**Im Vogelsang 2**
**D-6719 Weisenheim(DE)**

## (54) Hochtemperaturbeständige Cyanophenyleneinheiten gebunden enthaltende Polyarylenethersulfon-Blockcopolykondensate, Verfahren zu ihrer Herstellung und ihre Verwendung.

(57) Die Erfindung betrifft hochtemperaturbeständige Polyarylenethersulfon-Blockcopolykondensate die enthalten, bezogen auf die Summe von (A) und (B)

A) 5 bis 98 mol-% eines Polyarylenethersulfonblocks (A) mit einem Zahlenmittelwert des Molekulargewichts im Bereich von 1 500 bis 30 000 und

B) 2 bis 95 mol-% eines Polycyanoaryletherblocks (B), der Cyanophenyleneinheiten gebunden enthält, mit einem Zahlenmittelwert des Molekulargewichts im Bereich von 500 bis 15 000.

Die erfindungsgemäßen Cyanophenyleneinheiten aufweisende Blockpolykondensate besitzen eine vergleichsweise hohe Glasübergangstemperatur von ungefähr 200 °C, eine verbesserte Lösungsmittelbeständigkeit und sind thermisch nachvernetzbar.

Sie eignen sich z.B. zur Herstellung von Formkörpern.

EP 0 336 159 A1

# Hochtemperaturbeständige Cyanophenyleneinheiten gebunden enthaltende Polyarylenethersulfon-Blockcopolykondensate, Verfahren zu ihrer Herstellung und ihre Verwendung

Gegenstand der Erfindung sind Blockcopolykondensate, die aufgebaut sind aus mindestens einem Polyarylenethersulfonblock (A) und mindestens einem Polycyanoaryletherblock (B).

Polykondensationsprodukte mit aromatisch gebundenen Sulfongruppen sind bekannt aus Literatur- und Patentpublikationen. Verwiesen wird z.B. auf J. Chem. Soc. (1961), Seiten 1604 bis 1610; J. Polymer Sci (1959), 40, Seiten 399 bis 406 und die DE-B-1 545 106 (US-A- 4 175 175).

Polyarylenethersulfone besitzen gute mechanische Eigenschaften, beispielsweise Zähigkeit und Wärmealterungsbeständigkeit sowie elektrische Eigenschaften.

Statistische Ethersulfon-Etherketon-Copolymerisate mit wiederkehrenden Einheiten

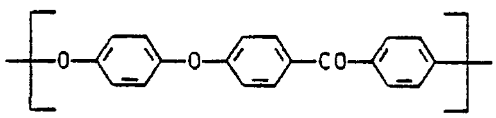

und

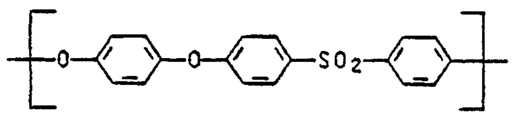

werden z.B. beschrieben in der EP-A-1879. Die Polykondensate sind erhältlich durch gleichzeitige Kondensation von Hydrochinon, 4,4′-Dichlorbenzophenon und 4,4′-Dichlordiphenylsulfon.

Bekannt sind ferner Arylenetherketon-Polykondensate mit Brückengliedern wie z.B. -CO-, -SO-, -S-, $-SO_2-$, -O-, Alkylen-, Cycloalkylen-, Arylen-, Alkyliden- oder -Cycloalkylidengruppen mit 2 bis 20 C-Atomen, z.B. aus der EP-A- 030 033 oder der EP-A-161 453.

Polyarylenethersulfone, die Cyanophenylengruppen gebunden enthalten, sind ebenfalls Gegenstand mehrerer Patentveröffentlichungen. Hierzu beispielhaft genannt seien die DE-A- 22 02 168 (US-A-37 30 946) und die EP-A-121 257, EP-A-187 638 und EP-A-192 177. Während die Polykondensationsprodukte gemäß DE-A-22 02 168 und EP-A-121 257 Einheiten der Formeln

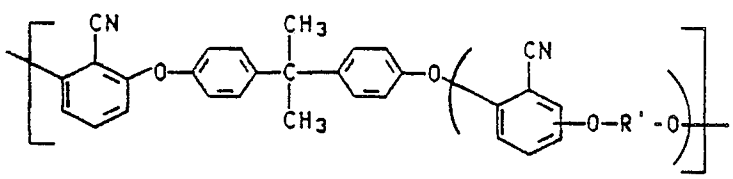

,

wobei R′ einen p- oder m-Phenylenrest oder eine 2,2-Diphenylpropangruppe bedeuten, bzw.

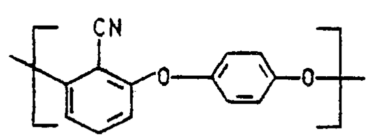

gebunden enthalten, besitzen die Polycyanoarylether gemäß EP-A-187 638 und EP-A-192 177 insbesondere Polymereinheiten der Formel

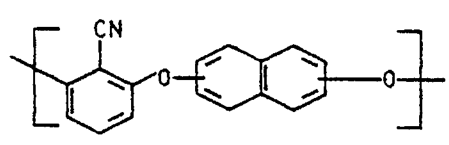

.

Statistische Copolykondensate, die wiederkehrende Einheiten der Formeln

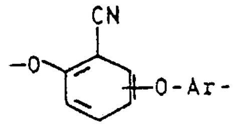
und
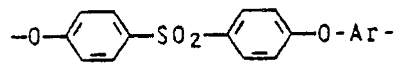

gebunden haben, wobei Ar einen p- oder m-Phenylen-, Diphenylen-, Diphenylensulfid-, Diphenylenether-, Diphenylenketon- oder Diphenylenalkylenrest bedeutet, sind bekannt aus der japanischen Patentanmeldung J 6 0161-428. Nach Angaben der Referatekopie besitzen die Copolykondensate eine gute Widerstandsfähigkeit gegen Hitze, Feuer und Lösungsmitteln.

Nach Angaben der DE-A-32 27 933 finden derartige Cyanophenyleneinheiten aufweisende Polyarylenethersulfone Verwendung zum Beschichten von Metalldrähten nach dem Extrusionsverfahren. Gemäß EP-A-192 262 eignen sich die Polykondensationsprodukte zur Herstellung von Filmen und Fasern und gemäß EP-A-193 114 zur Herstellung von faserverstärkten Laminaten.

Obgleich die bekannten, Cyanophenyleneinheiten in statistischer Verteilung enthaltende Copolykondensate gute mechanische Eigenschaften besitzen und daher in zahlreichen Anwendungsbereichen Verwendung finden, bedürfen auch diese Werkstoffe, insbesondere hinsichtlich spezieller Eigenschaften, einer ständigen Verbesserung.

Die Aufgabe der vorliegenden Erfindung bestand darin, die Glasübergangstemperatur von Polyarylenethersulfonen, auch im Vergleich zu Polysulfon- Polyetherketon-Blockcopolymeren, zu erhöhen und die Lösungsmittelbeständigkeit der Polykondensate zu verbessern.

Diese Aufgabe konnte überraschenderweise gelöst werden durch Blockcopolykondensate, die Polyarylenethersulfonblöcke und Polycyanoaryletherblöcke mit bestimmten Molekulargewichten und in bestimmten Mengenverhältnissen gebunden enthalten und dadurch eine Glasübergangstemperatur von ungefähr 200° C und eine verbesserte Lösungsmittelbeständigkeit besitzen. Vorteilhaft ist ferner, daß die erfindungsgemäßen Blockcopolykondensate einer thermischen Nachvernetzbarkeit durch Cyclisierung der CN-Gruppen zugänglich sind.

Gegenstand der Erfindung sind somit hochtemperaturbeständige Blockcopolykondensate, die enthalten oder vorzugsweise bestehen aus;

A) 5 bis 98 mol-%, vorzugsweise 10 bis 97 mol-% und insbesondere 20 bis 95 mol-%, bezogen auf die Summe von (A) und (B), Polyarylenethersulfonblöcken mit einem Zahlenmittelwert des Molekulargewichts $\overline{M}n$ im Bereich von 1 500 bis 30 000, aufgebaut aus Einheiten der allgemeinen Formel (I)

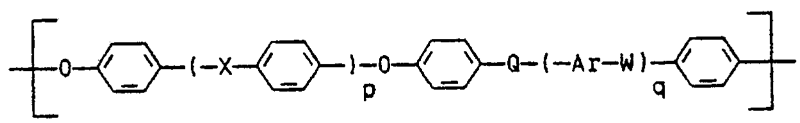
(I)

oder deren am Arylenrest mit Phenyl-, $C_1$-$C_6$-Alkyl- oder $C_1$-$C_6$-Alkoxygruppen, Chlor- oder Fluoratomen substituierten Derivate, wobei bedeuten:

Ar einen p-Phenylen- oder Diphenylenrest

X, Q und W eine chemische Bindung oder gleiche oder verschiedene Brückenglieder aus der Gruppe $-SO_2-$, -O-, -S-, -CO- oder $CR^1R^2$- mit der Maßgabe, daß mindestens eines der Brückenglieder $-SO_2-$ ist,

$R_1$ und $R_2$ gleich oder verschieden und jeweils Wasserstoffatome, $C_1$-$C_6$-Alkyl-, $C_1$-$C_6$-Alkoxygruppen, Phenylgruppen oder deren Fluor- oder Chlorderivate sind, und

p und q jeweils den Wert 0 oder 1 haben

und

B) 2 bis 95 mol-%, vorzugsweise 3 bis 90 mol-% und insbesondere 5 bis 80 mol-%, bezogen auf die Summe von (A) und (B), Polycyanoaryl- etherblöcken mit einem Zahlenmittelwert des Molekulargewichts $\overline{M}$ n von 500 bis 15.000, aufgebaut aus Einheiten der allgemeinen Formeln (II)

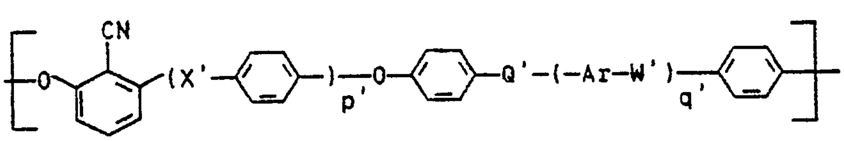
(II)

oder (III)

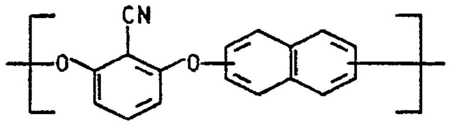

(III)

oder von Mischungen aus Einheiten der Formeln (II) und (III), wobei die Arylenreste mit Phenyl-, $C_1$-$C_6$-Alkyl- oder $C_1$-$C_6$-Alkoxygruppen, Chlor- oder Fluoratomen substituiert sein können,

Ar′ einen p-Phenylen- oder Diphenylenrest,

X′ Q′ und W′ eine chemische Bindung oder gleiche oder verschiedene Brückenglieder aus der Gruppe $-SO_2$, -S-, -O-, -CO- oder $-CR^1R^2$-bedeuten, und

p′ und q′ jeweils den Wert 0 oder 1 haben.

Außerdem betrifft die Erfindung ein Verfahren zur Herstellung von hochtemperaturbeständigen Blockcopolykondensaten durch Polykondensation von aromatischen Dihalogenverbindungen und aromatischen Dihydroxyverbindungen in polaren aprotischen Lösungsmitteln in Gegenwart von Alkalimetallcarbonaten, das dadurch gekennzeichnet ist, daß

a) in einer ersten Reaktionsstufe durch Umsetzung von Monomeren der Formeln (Ia) und/oder (Ib)

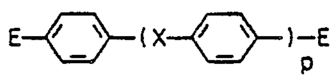

(Ia)

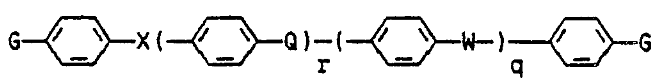

(Ib)

wobei

X,Q, W, p und q die in Anspruch 1 angegebene Bedeutung haben

r den Wert 0 oder 1 hat

und

E und G Hydroxyl, Chlor oder Fluor sind mit der Maßgabe, daß das Verhältnis von Hydroxylendgruppen zu Chlor- und/oder Fluor-Endgruppen im Bereich von 0,8 : 1 bis 1,2 : 1 liegt

Polyarylenethersulfonblöcke (A) hergestellt werden und anschließend

b) in einer zweiten Reaktionsstufe an diese Polycyanoaryletherblöcke (B) ankondensiert werden durch Umsetzung von Cyanodihalogenbenzolen der Formeln

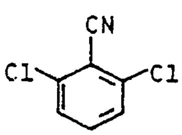

(IV) und/oder

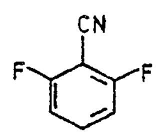

(V),

mit Monomeren der Formel

HO-AR′-OH (VI),

in der bedeutet

AR′ einen Phenylen-, Diphenylen-, Naphthylenrest oder eine Gruppe

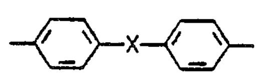

,

in der X ein Brückenglied $-CH_2$-, $-C(CH_3)_2$-, $-SO_2$-, -S-, -O- oder -CO- ist und das Verhältnis von Hydroxyl- zu Chlor- und/oder Fluorendgruppen im Bereich von 0,8:1 bis 1,2:1 liegt und die Monomeren (Ia) und/oder (Ib) und (IV) und/oder (V) und (VI) in solchen Mengen verwendet werden, daß die resultierenden Polyarylenethersulfonblöcke (A) und Polycyanoaryletherblöcke (B) in einem Verhältnis der Molprozente von 98:2 bis 5:95 vorliegen.

Weitere Erfindungsgegenstände sind die Verwendung der hochtemperaturbe-ständigen Blockcopolykondensate nach einem der Ansprüche 1 bis 6 zur Herstellung von Formkörpern und Formkörper, die enthalten bzw. bestehen aus hochtemperaturbeständigen Blockcopolykondensaten nach einem der Ansprüche 1 bis 6.

Als Komponente (A) enthalten die erfindungsgemäßen Blockcopolykondensate, wie bereits ausgeführt wurde, Polyethersulfonblöcke aus Einheiten der allgemeinen Formel I

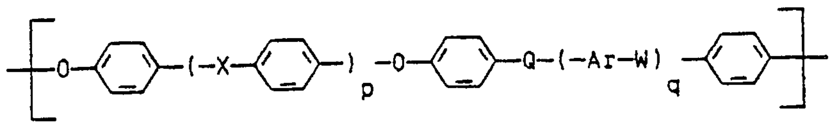
(I)

oder deren an den Arylenresten mit Phenyl-, Halogenphenylgruppen, wie z.B. Chlorphenylgruppen, $C_1$- bis $C_6$- Alkyl-, vorzugsweise $C_1$- bis $C_3$-Alkylgruppen oder den entsprechenden Fluor- oder Chlorderivaten, beispielsweise Methyl-, Ethyl-, n- und iso-Propyl-, Amyl-, Trichlormethyl- und/oder Trifluormethylgruppen oder $C_1$- bis $C_6$-Alkoxy-, vorzugsweise $C_1$- bis $C_3$-Alkoxygruppen oder den entsprechenden Fluor- oder Chlorderivaten, wie z.B. Methoxy-, Trifluormethoxy-, Ethoxy-, 2,2,2-Trichlorethoxy-, n- und iso-Propoxy-, Perfluorpropoxygruppen, substituierten Derivate. Bevorzugte Substituenten sind die Methyl-, Phenyl- und Trifluormethylgruppe.

In der Formel (I) bedeuten:

Ar p-Phenylen- oder Diphenylenreste,

X, Q und W Brückenglieder, die gleich oder verschieden oder eine chemische Bindung sein können und ausgewählt sind aus der Gruppe $-SO_2-$, -O-, -S-, -CO- oder $-CR^1R^2-$ mit der Maßgabe, daß mindestens eines der Brückenglieder $-SO_2-$ ist.

Die Reste $R^1$ und $R^2$ des Brückengliedes $-CR^1R^2-$ können gleich oder verschieden sein und jeweils bedeuten Wasserstoffatome, $C_1$- bis $C_6$-, vorzugsweise $C_1$- bis $C_3$-Alkylgruppen, $C_1$- bis $C_6$-Alkoxy-, vorzugsweise $C_1$- bis $C_3$-Alkoxygruppen und Phenylgruppen sowie die entsprechenden mit Halogenatomen, vorzugsweise Chlor- oder Fluoratomen, substituierten Derivate, wobei als Brückenglieder vorzugsweise die $-CH_2$-Gruppe und insbesondere die $-C(CH_3)_2$-Gruppe zu nennen sind. Geeignete $R^1$- und $R^2$-Reste sind beispielsweise die oben beispielhaft genannten Arylensubstituenten.

Neben der $-SO_2$-Gruppe haben sich als Brückenglieder insbesondere -O- und $-C(CH_3)_2$-bewährt, so daß diese vorzugsweise in den Polyarylenethersulfonblöcken (A) gebunden sind.

Die Parameter p und q können jeweils den Wert null oder 1 haben.

Das Molekulargewicht $\overline{M}n$ (Zahlenmittelwert) der Polyarylenethersulfonblöcke (A) liegt im Bereich von 1 500 bis 30 000, vorzugweise von 2 000 bis 25 000 und insbesondere von 3 000 bis 22 000.

Beispiele für Einheiten der Formel (I) der Polyarylenethersulfonblöcke (A) sind

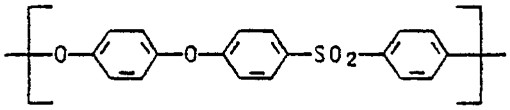
(I1)

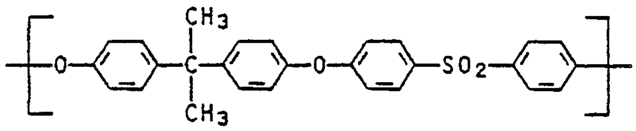
(I2)

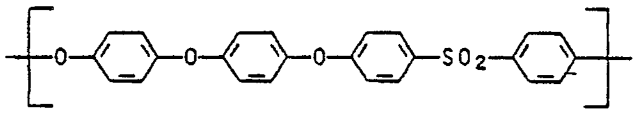
(I3)

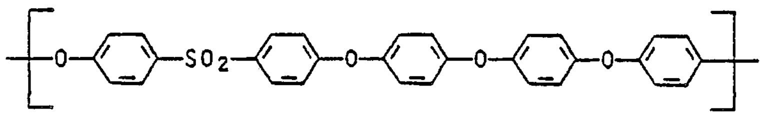
(I4)

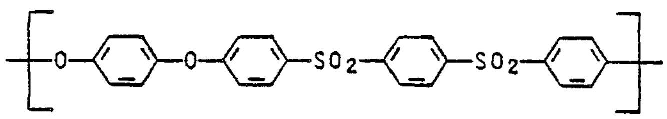
(I5)

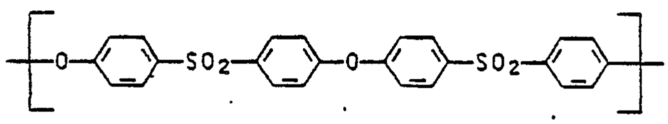
(I6)

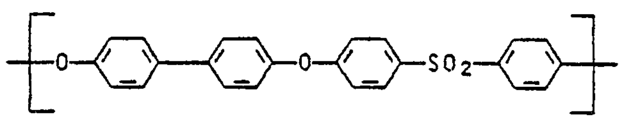
(I7)

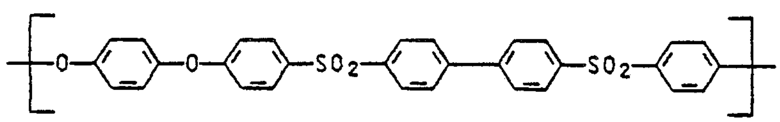
(I8)

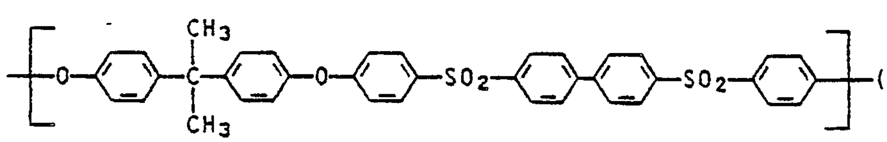
(I9)

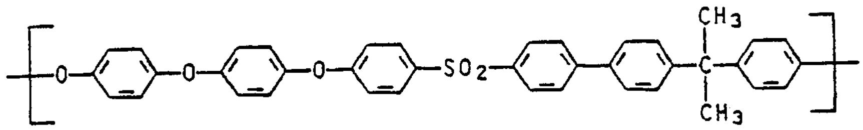
(I10)

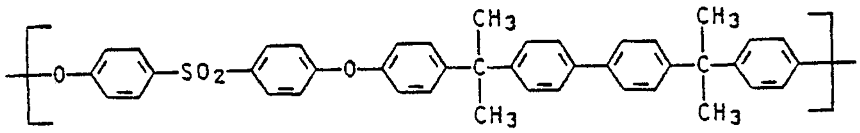
(I11)

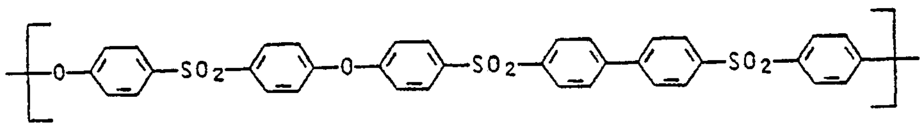
(I12),

wobei die Einheiten (I6) und (I2) bevorzugt sind und die beispielhaft genannte Auswahl nur stellvertretend für die unter die Formel (I) fallende Einheiten (I1) bis (I12) steht. Über den Arylenrest Ar, die Brückenglieder X, Q und W und die Parameter p und q lassen sich die vorstehenden Beispiele wie folgt beschreiben:

| | p | q | Ar | X | Q | W |
|---|---|---|---|---|---|---|
| I1 | 0 | 0 | - | - | $-SO_2-$ | - |
| I2 | 1 | 0 | - | $-C(CH_3)_2-$ | $-SO_2-$ | - |
| I3 | 1 | 0 | - | -O- | $-SO_2-$ | - |
| I4 | 1 | 1 | Phenylen | $-SO_2-$ | -O- | -O- |
| I5 | 0 | 1 | Phenylen | - | $-SO_2-$ | $-SO_2-$ |
| I6 | 1 | 0 | - | $-SO_2-$ | $-SO_2-$ | - |
| I7 | 1 | 0 | - | Chem. Bdg. | $-SO_2-$ | - |
| I8 | 0 | 1 | Diphenylen | - | $-SO_2-$ | $-SO_2-$ |
| I9 | 1 | 1 | Diphenylen | $-C(CH_3)_2-$ | $-SO_2-$ | $-SO_2-$ |
| I10 | 1 | 1 | Diphenylen | -O- | $-SO_2-$ | $-C(CH_3)_2-$ |
| I11 | 1 | 1 | Diphenylen | $-SO_2-$ | $-C(CH_3)_2-$ | $-C(CH_3)_2-$ |
| I12 | 1 | 1 | Diphenylen | $-SO_2-$ | $-SO_2-$ | $-SO_2-$ |

Sofern die Polyarylenethersulfonblöcke (A) aus mindestens zwei Einheiten (I1) bis (I12), vorzugsweise aus den Einheiten (I6) und (I2), bestehen, können die Copolykondensate, die Einheiten (I1) bis (I12), vorzugsweise die Einheiten (I6) und (I2) in statistischer Verteilung oder in Form von Blöcken gebunden enthalten.

Als Komponente (B) enthalten die erfindungsgemäßen Blockcopolykondensate, wie ebenfalls bereits dargelegt wurde, Polycyanoaryletherblöcke (B), die aufgebaut sind aus Einheiten der allgemeinen Formeln (II)

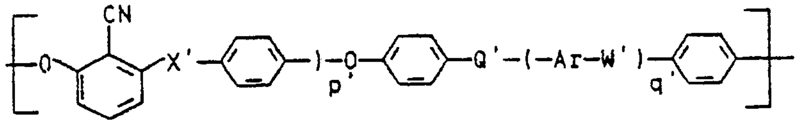
(II)

oder

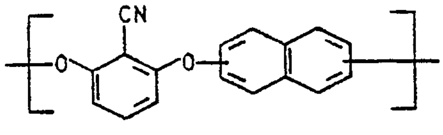
(III)

oder von Mischungen aus Einheiten der Formeln (II) und (III), wobei die Arylenreste analog den Polyarylenethersulfonblöcken (A) substituiert sein können mit Phenylgruppen, Halogenphenylgruppen, $C_1$- bis $C_6$-Alkyl-, vorzugsweise $C_1$- bis $C_3$-Alkylgruppen oder den entsprechenden Fluor- oder Chlorderivaten oder $C_1$- bis $C_6$-Alkoxy-, vorzugsweise $C_1$- bis $C_3$-Alkoxygruppen oder den entsprechenden Fluor- oder Chlorderivaten.

In der Formel (II) bedeuten ferner

Ar einen p-Phenylen- oder Diphenylenrest, X′ Q′ und W′ eine chemische Bindung oder gleiche oder verschiedene Brückenglieder aus der Gruppe $-SO_2-$, -S-, -O-, -CO- oder $-CR^1R^2-$, wobei die Reste $R^1$ und $R^2$ die vorgenannte Bedeutung haben, und

die Parameter p und q jeweils den Wert null oder 1 haben.

Das Molekulargewicht $\overline{M}n$ (Zahlenmittelwert) der Polycyanoaryletherblöcke (B), aufgebaut aus Einheiten der Formeln (II) oder/und (III), liegt im allgmeinen im Bereich von 500 bis 15 000, vorzugsweise von 1 500 bis 10 000.

Beispiele für Einheiten der Formel (II) oder (III) der Polycyanoaryletherblöcke (B) sind

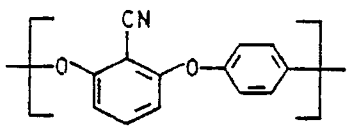

(II1)

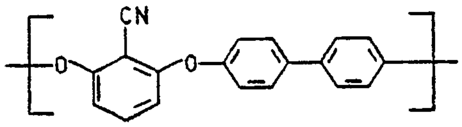

(II2)

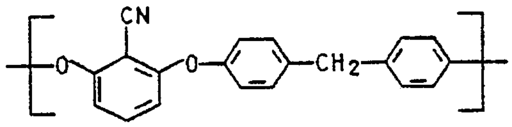

(II3)

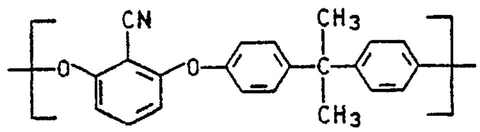

(II4)

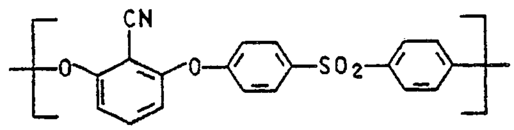

(II5)

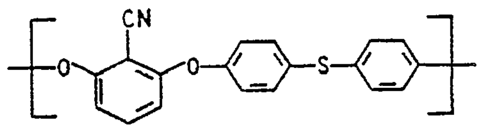

(II6)

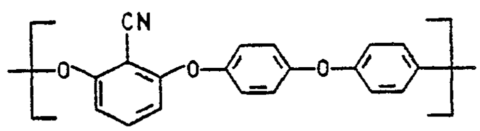

(II7)

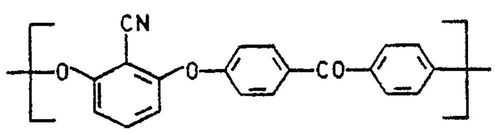

(II8)

und

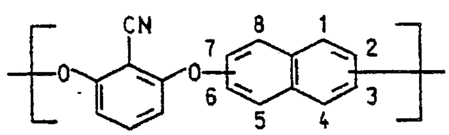

(III),

wobei die Einheiten (II2), (II4), (II5) und (III) bevorzugt sind, die Einheit (II1) insbesondere bevorzugt ist und die beispielhaft genannte Auswahl nur stellvertretend für die unter die Formel (II) fallende Einheiten (II1) bis (II8) stehen. Die Naphthylengruppe gemäß Formel (III) ist üblicherweise über die Kohlenstoffatome 1,5, 1,6, 1,7, 2,6, 2,7 vorzugsweise jedoch über die Kohlenstoffatome 1,6 und 2,7 gebunden im Copolykondensat.

Die erfindungsgemäßen hochtemperaturbeständigen Blockcopolykondensate können nach an sich bekannten, in der Literatur beschriebenen Verfahren zur Herstellung von Blockcopolykondensaten erhalten werden. Grundsätzlich können die Polyarylenethersulfonblöcke (A) und Polycyanoaryletherblöcke (B) getrennt hergestellt und anschließend miteinander verknüpft werden oder aber die Blockcopolykondensate werden durch entsprechende aufeinanderfolgende getrennte Zugabe der Monomeren in einem Zuge synthetisiert.

Nach dem letztgenannten vorzugsweise zur Anwendung kommenden Herstellungsverfahren werden aromatische Dihalogenverbindungen und aromatische Dihydroxyverbindungen in polaren aprotischen Lösungsmitteln in Gegenwart von Alkalimetallcarbonaten so polykondensiert, daß

a) in einer ersten Reaktionsstufe durch Umsetzung von Monomeren der Formeln (Ia) und/oder (Ib)

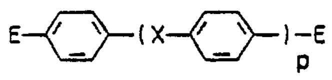 (Ia)

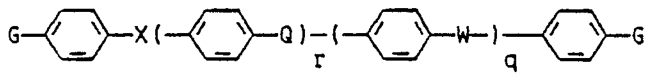 (Ib),

wobei
X, Q, W, p und q die vorgenannte Bedeutung haben,
der Parameter r den Wert null oder 1 hat und
Eund G Hydroxyl, Chlor oder Fluor sind mit der Maßgabe, daß das Verhältnis von Hydroxylendgruppen zu Chlor- und/oder Fluorendgruppen im Bereich von 0,8:1 bis 1,2:1, vorzugsweise 0,9:1 bis 1,1:1 liegt, Polyarylenethersulfonblöcke (A) hergestellt werden und anschließend

b) in einer zweiten Reaktionsstufe an diese Polycyanoaryletherblöcke (B) ankondensiert werden durch Umsetzung von Cyanodihalogenbenzolen der Formeln

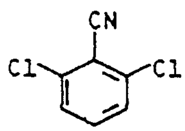 (IV) und/oder 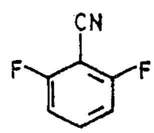 (V)

mit Monomeren der Formel
HO-AR′-OH (VI),
in der bedeutet:
AR′ einen Phenylen-, Diphenylen-, Naphthylenrest oder eine Gruppe

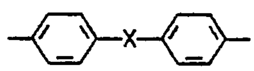 ,

in der X ein Brückenglied $-CH_2-$, $-C(CH_3)_2-$, $-SO_2-$, -S-, -O- oder -CO- ist
und das Verhältnis von Hydroxyl- zu Chlor- und/oder Fluorendgruppen im Bereich von 0,8:1 bis 1,2:1, vorzugsweise von 0,8:1 bis 1,1:1 liegt.

Als Beispiele für Dihydroxy- und Dihalogenverbindungen, die zur Herstellung der Polyarylenethersulfonblöcke (A) und Polycyanoaryletherblöcke (B), in den erfindungsgemäßen Blockcopolykondensaten eingesetzt werden können, seien stellvertretend genannt:

Dihydroxyverbindungen

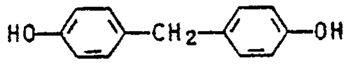

Di-(4-hydroxyphenyl)methan

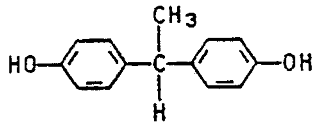

1,1-Di(4-hydroxyphenyl)ethan

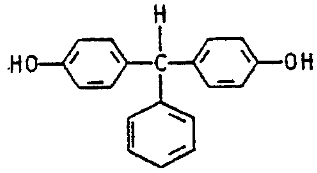

Phenyl-di-(4-hydroxyphenyl)-methan

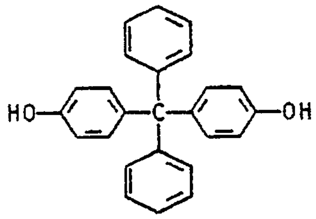

Diphenyl-di-(4-hydroxyphenyl)methan

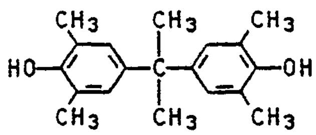

3,3',5,5'-Tetramethylbisphenol A

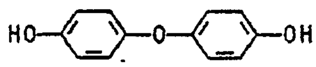

4,4'-Dihydroxydiphenylether

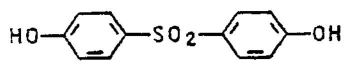 4,4'-Dihydroxydiphenylsulfon

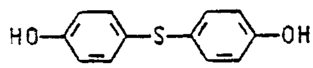 4,4'-Dihydroxydiphenylsulfid

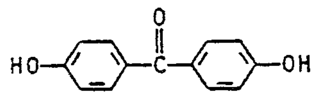 4,4'-Dihydroxybenzophenon

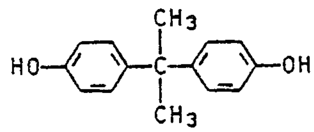 Bisphenol A

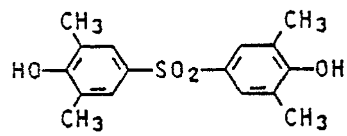 3,3,'5,5'-Tetramethylbisphenol S

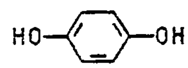 Hydrochinon

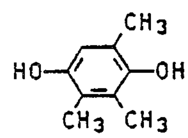 2,3,5-Trimethylhydrochinon

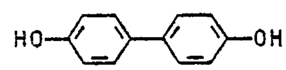 4,4'-Dihydroxydiphenyl

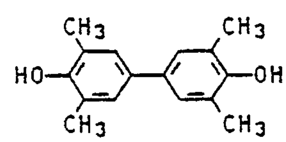 3,3',5,5'-Tetramethyl-4,4'-dihydroxydiphenyl

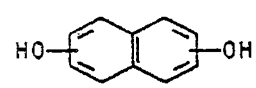 Dihydroxynaphthaline

Von den vorstehend aufgeführten Dihydroxyverbindungen werden vorzugsweise 4,4'-Dihydroxydiphenyl, Bisphenol S und insbesondere Hydrochinon und Bisphenol A verwendet.

Dihalogenverbindungen

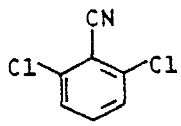

2,6-Dichlorbenzonitril

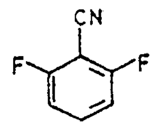

2,6-Difluorobenzonitril

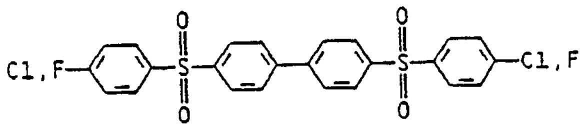

4,4'-Di-(4-chlorphenylsulfonyl)-diphenyl bzw. 4,4'-Di-(4-fluorphenylsulfonyl)-diphenyl

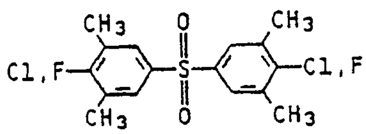

3,3',5,5'-Tetramethyl-4,4'-dichlordiphenylsulfon bzw. -difluordiphenylsulfon

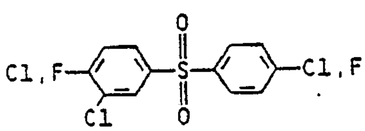

3-Chlor-4,4'-dichlordiphenylsulfon bzw. 3-Chlor-4,4'-difluordiphenylsulfon

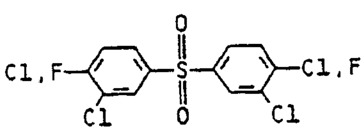

3,3',4,4'-Tetrachlordiphenylsulfon bzw. 3,3'-Dichlor-4,4'-difluordiphenylsulfon

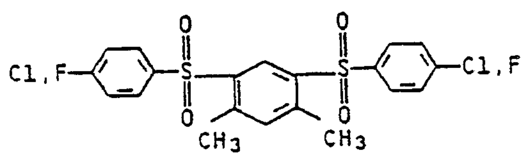

1,5-Dimethyl-2,4-di(4'-chlorphenylsulfonyl)benzol bzw. 1,5-Dimethyl-2,4-di(4'-fluorphenylsulfonyl)benzol

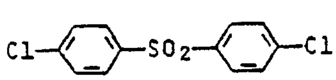

4,4'-Dichlordiphenylsulfon

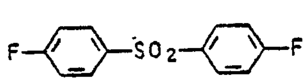

4,4'-Difluordiphenylsulfon

Von den vorstehend genannten Dihalogenverbindungen werden 4,4'-Dichlordiphenylsulfon und 2,6-Dichlorobenzonitril besonders bevorzugt.

Die vorstehend genannten Verbindungen können, solange die Voraussetzungen des Anspruchs 1 erfüllt sind, prinzipiell in beliebiger Kombination miteinander umgesetzt werden.

In jedem Fall ist es für die Erzielung der vorteilhaften Eigenschaften der Blockcopolykondensate

wesentlich, daß als Polycyanoaryletherblock (B) mindestens einer der Blöcke der allgemeinen Formeln II oder III vorhanden ist.

Das Gesamtmolekulargewicht der Blockcopolykondensate liegt im Bereich von 15 000 - 200 000, vorzugsweise von 15 000 - 100 000 und insbesondere im Bereich von 20 000 - 50 000.

Alle vorstehend genannten Molekulargewichtswerte sind Zahlenmittelwerte, wie sie z.B. in E. Vollmert, Grundriß der Makromolekularen Chemie, Bd. 3, S. 122 ff (1979) definiert sind.

Die Verfahrensbedingungen zur Herstellung der erfindungsgemäßen hochtemperaturbeständigen Blockcopolykondensate wie Temperatur, Druck, geeignete Lösungsmittel und evtl. Zusätze (Katalysatoren) sind die gleichen, wie sie für statistische Copolykondensate in der EP-A 113 112 und der EP-A 135 130 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als basischer Katalysator.

Die Menge an N-Methylpyrrolidon beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines verminderten Drucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 130 bis 220 °C, vorzugsweise 150 bis 210 °C; die Gesamt-Reaktionsdauer richtet sich nach dem gewünschten Kondensationsgrad, liegt aber im allgemeinen im Bereich von 0,1 bis 15 Stunden in den einzelnen Stufen.

Bei niedrigem Anteil an Polycyanoaryletherblöcken (2 bis 40 mol-%, abhängig von der Struktur der Monomeren) erhält man in der Regel amorphe Produkte, die jedoch hinsichtlich Lösungsmittelbeständigkeit statistischen Copolymeren gleicher prozentualer Zusammensetzung weit überlegen sind.

Blockcopolykondensate mit höheren Gehalten an Polycyanoarylether können durch Tempern in teilkristalline Produkte überführt werden, die bei statistischen Copolymeren erst bei wesentlich höheren Cyanoaryletheranteilen zu beobachten sind. Das hat eine Verbesserung der mechanischen Eigenschaften bei höheren Temperaturen zur Folge.

Im Anschluß an die Polykondensation können zur Stabilisierung freie Phenolat-Endgruppen mit einem Aryl- oder Alkylierungsmittel, wie z.B. Methylchlorid, umgesetzt werden. Dies erfolgt vorzugsweise bei Temperaturen von 50-200 °C, vorzugsweise 50-150 °C.

Das bei der Polykondensation mit $K_2CO_3$ anfallende suspendierte Alkalihalogenid kann mit einer geeigneten Trenneinrichtung, beispielsweise einem Klärfilter oder einer Zentrifuge abgetrennt werden.

Die Isolierung der Copolykondensate aus der Lösung kann durch Verdampfen des Lösungsmittels oder Ausfällung in einem geeigneten Nichtlösungsmittel erfolgen.

Die erfindungsgemäßen Blockcopolykondensate zeichnen sich durch ihre ausgewogenen Eigenschaften aus. Bei einer hohen Wärmeformbeständigkeit und einer guten Spannungsrißbeständigkeit zeichnen sie sich durch eine gute Lösungsmittelbeständigkeit sowie geringe Wasseraufnahme aus und sind sehr gut verarbeitbar.

Die erfindungsgemäßen Copolykondensate können mit anderen Thermoplasten, beispielsweise Polyestern, Polyamiden, Polyurethanen, Polyolefinen, Polyvinylchlorid und Polyoxymethylenen in Mengen von 5 bis 60 Gew.-%, vorzugsweise von 20 bis 50 Gew.-%, bezogen auf das Gewicht der erhaltenen Formmassen, gemischt werden.

Sie können außerdem mit verstärkend wirkenden Füllstoffen, gegebenenfalls transparenten Pigmenten und anderen Hilfs- und Zusatzstoffen modifiziert werden.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Gläsern mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-%, Copolykondensate, bezogen auf das Gesamtgewicht, enthalten. Als Pigmente eignen sich beispielsweise Titandioxid, Cadmiumoxid, Zinksulfid, Bariumsulfat und Ruß. Als andere Zusatz- und Hilfsstoffe kommen beispielsweise in Betracht Farbstoffe, Schmiermittel, wie z.B. Graphit, Polytetrafluorethylen oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz- und Hilfsstoffe werden üblicherweise in Mengen von 0,01 bis 3 Gew.-%, bezogen auf das Gewicht an Copolykondensat, eingesetzt.

Die erfindungsgemäßen hochtemperaturbeständigen Blockcopolykondensate finden vorzugsweise Verwendung zur Herstellung von Formkörpern, wobei diese vollständig aus den Blockcopolykondensate bestehen oder in den vorgenannten Mengen neben anderen Thermoplasten enthalten sein können. Die Blockcopolykondensate eignen sich ferner beispielsweise zur Herstellung von Folien und Fasern und wegen ihrer guten mechanischen Eigenschaften insbesondere zur Herstellung von Leiterplatten und elektrischen Steckverbindungen.

Die in den nachfolgenden Beispielen angegebene reduzierte Viskosität $\eta_{spec/c}$ wurde bei 25 °C in 1 gew.%iger Lösung in N-Methylpyrrolidon bestimmt.

Beispiel 1

Die Reaktionsmischung aus 86,15 g (0,3 mol) 4,4′-Dichlordiphenylsulfon, 71,92 g (0,315 mol) 2,2-Di(4-hydroxyphenyl)propan und 45,61 g (0,33 mol) Kaliumcarbonat in 700 ml N-Methylpyrrolidon wurde 1 Stunde mit $N_2$ gespült und anschließend unter intensivem Rühren auf 190 °C erhitzt. Das entstehende Reaktionswasser wurde azeotrop mit N-Methylpyrrolidon im Stickstoffstrom innerhalb von 2 Stunden abdestilliert und das Reaktionsgemisch weitere 5 Stunden bei dieser Temperatur belassen.

Nach dem Abkühlen wurden 12,90 g (0,075 mol) 2,6-Dichlorbenzonitril, 6,61 g (0,06 mol) Hydrochinon und 9,12 g (0,066 mol) Kaliumcarbonat mit 120 ml N-Methylpyrrolidon hinzugefügt und unter $N_2$-Einleitung auf 190 °C erhitzt.

Nach dem Abtrennen des Reaktionswassers in ungefähr 2 Stunden wurde die Temperatur weitere 2 Stunden beibehalten und anschließend zum Verschluß der Endgruppen mit Methylchlorid 30 min gespült.

Nach dem Abkühlen wurde das Blockcopolykondensat mit Wasser/Methanol im Gewichtsverhältnis 1:1 ausgefällt und mehrmals mit Wasser gewaschen. Das Produkt wurde 12 Stunden bei 100 °C unter vermindertem Druck getrocknet und besaß danach eine reduzierte Viskosität von 0,59 dl/g und eine Glasübergangstemperatur Tg von 190 °C (gemessen nach Differential Scanning Calorimetrie (DSC).

Beispiel 2

Die Reaktionsmischung aus 172,3 g (0,6 mol) 4,4′-Dichlordiphenylsulfon, 157,7 g (0,63 mol) 4,4′-Dihydroxydiphenylsulfon und 94,94 g (0,686 mol) Kaliumcarbonat in 700 ml N-Methylpyrrolidon wurde 1 Stunde mit Stickstoff gespült und anschließend unter intensivem Rühren auf 190 °C erhitzt. Das entstehende Reaktionswasser wurde innerhalb einer Stunde als Wasser/N-Methylpyrrolidon-Azeotrop abdestilliert und das Reaktionsgemisch nochmals 1 Stunde bei 190 °C polykondensiert.

Nach dem Abkühlen wurden 13,22 g (0,12 mol) Hydrochinon, 25,8 g (0,15 mol) 2,6-Dichlorbenzonitril, 19,1 g (0,138 mol) Kaliumcarbonat und 80 ml N-Methylpyrrolidon hinzugefügt und unter einem Stickstoff-Strom auf 190 °C erhitzt. Innerhalb von 1 Stunde wurde das Reaktionswasser abdestilliert und das Reaktionsgemisch weitere 2 Stunden bei dieser Temperatur belassen. Zuletzt wurde 30 min mit Methylchlorid gespült und die abgekühlte Reaktionsmischung in Wasser/Methanol (Gewichtsverhältnis 1:1) ausgefällt.

Nach dem Trocknen bei 100 °C unter vermindertem Druck in 12 Stunden besaß das Blockcopolykondensat eine reduzierte Viskosität von 0,44 dl/g und eine Glasübergangstemperatur Tg von 226 °C (gemessen nach DSC).

Beispiel 3

Eine Reaktionsmischung aus 86,15 g (0,3 mol) 4,4′-Dichlordiphenylsulfon, 39,42 g (0,1575 mol) 4,4′-Dihydroxydiphenylsulfon, 35,96 g (0,1575 mol) 2,2-Di(4-hydroxyphenyl)propan und 45,61 g (0,33 mol) Kaliumcarbonat in 700 ml N-Methylpyrrolidon und 120 ml Toluol wurde 1 Stunde mit Stickstoff gespült und anschließend unter intensivem Rühren auf 190 °C erhitzt. Das Reaktionswasser wurde als Azeotrop mit Toluol aus der Reaktionsmischung in ca 4,5 Stunden abgetrennt, das Toluol abdestilliert und die Mischung

3 Stunden bei der genannten Temperatur belassen.

Nach dem Abkühlen wurden 26,43 g (0,24 mol) Hydrochinon, 43,86 g (0,255 mol) 2,6-Dichlorbenzonitril und 36,49 g (0,264 mol) Kaliumcarbonat sowie 420 ml N-Methylpyrrolidon und 100 ml Toluol hinzugefügt, unter einem $N_2$-Strom bei 170 °C in 2 Stunden das Reaktionswasser abdestilliert und weitere 2 Stunden polykondensiert.

Nach 30-min. Einleiten von Methylchlorid wurde die leicht abgekühlte Reaktionsmischung in Wasser/Methanol (Gewichtsverhältnis 1:1) gefällt. Das Blockcopolykondensat wurde mehrmals mit Wasser gewaschen und bei 100 °C unter vermindertem Druck 12 Stunden lang getrocknet. Es war unlöslich in N-Methylpyrrolidon und besaß eine Glasübergangstemperatur Tg von 196 °C (gemessen nach DSC).

Beispiel 4

Man verfuhr analog den Angaben von Beispiel 1, verwendete jedoch zur Herstellung des Polycyanoaryletherblocks (B) anstelle von 6,61 g (0,06 mol) Hydrochinon 11,17 g (0,06 mol) 4,4′-Dihydroxydiphenyl.

Das erhaltene Blockcopolykondensat besaß eine reduzierte Viskosität von 0,64 dl/g und eine Glasübergangstemperatur von 203 °C (gemessen nach DSC).

Beispiel 5

Man verfuhr analog den Angaben des Beispiels 1, verwendete jedoch folgende Ausgangsstoffe:

a) zur Herstellung des Polyarylenethersulfonblocks (A) 86,15 g (0,3 mol) 4,4′-Dichlordiphenylsulfon,
58,66 g (0,315 mol) 4,4′-Dihydroxydiphenyl,
45,61 g (0,33 mol) Kaliumcarbonat und
700 ml N-Methylpyrrolidon. b) zur Herstellung des Polycyanoarylenetherblock (B) 22,53 g (0,121 mol) 4,4′-Dihydroxydiphenyl,
23,39 g (0,136 mol) 2,6-Dichlorbenzonitril,
18,39 g (0,133 mol) Kaliumcarbonat und
100 ml N-Methylpyrrolidon.

Das erhaltene Blockcopolykondensat besaß eine reduzierte Viskosität von 0,56 dl/g und eine Glasübergangstemperatur Tg von 215 °C (gemessen nach DSC).

Zur Herstellung der erfindungsgemäßen Blockcopolykondensate können anstelle von N-Methylpyrrolidon auch andere Lösungsmittel, wie z.B. Dimethylacetamid und Sulfolan verwendet werden, wobei Sulfolan zweckmäßigerweise bei der Polykondensation mit niedrigen Feststoffkonzentrationen eingesetzt wird.

**Ansprüche**

1. Hochtemperaturbeständige Blockcopolykondensate, enthaltend

A) 5 bis 98 mol-% Polyarylenethersulfonblöcke mit einem Zahlenmittelwert des Molekulargewichts $\overline{M}_n$ im Bereich von 1 500 bis 30 000, aufgebaut aus Einheiten der allgemeinen Formel (I)

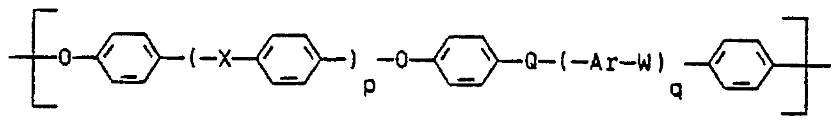
(I)

oder deren am Arylenrest mit Phenyl-, $C_1$-$C_6$-Alkyl- oder $C_1$-$C_6$-Alkoxygruppen, Chlor- oder Fluoratomen substituierten Derivate, wobei bedeuten:

Ar p-Phenylen- oder Diphenylenreste,

X, Q und W eine chemische Bindung oder gleiche oder verschiedene Brückenglieder aus der Gruppe $-SO_2$, -O-, -S-, -CO- oder $-CR^1R^2-$ mit der Maßgabe, daß mindestens eines der Brückenglieder $-SO_2-$ ist,

$R^1$ und $R^2$ gleich oder verschieden und jeweils Wasserstoffatome, $C_1$-$C_6$-Alkyl-, $C_1$-$C_6$-Alkoxygruppen, Phenylgruppen oder ihre Fluor- oder Chlorderivate sind, und p und q jeweils den Wert 0 oder 1 haben und

B) 2 bis 95 mol-% Polycyanoaryletherblöcke mit einem Zahlenmittelwert des Molekulargewichts $\overline{M}n$ von 500 bis 15 ooo, aufgebaut aus Einheiten der allgemeinen Formeln (II)

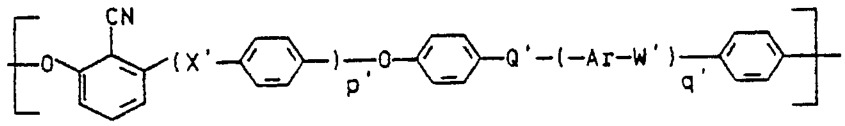

(II)

oder

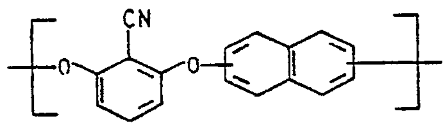

(III)

oder von Mischungen aus Einheiten der Formeln (II) und (III), wobei die Arylenreste mit Phenyl-, $C_1$-$C_6$-Alkyl-, $C_1$-$C_6$-Alkoxygruppen, Chlor- oder Fluoratomen substituiert sein können

Ar einen p-Phenylen- oder Diphenylenrest,

X′ Q′ und W′ eine chemische Bindung oder gleiche oder verschiedene Brückenglieder aus der Gruppe $-SO_2-$, -S-, -O-, -CO- oder $-CR^1R^2-$ bedeuten,

p′ und q′ jeweils den Wert 0 oder 1 haben und

die mol-% bezogen sind auf die Summe von (A) und (B).

2. Hochtemperaturbeständige Blockcopolykondensate nach Anspruch 1, bestehend, bezogen auf die Summe von (A) und (B), aus

A) 5 bis 98 mol-% Polyarylenethersulfonblöcken der Formel (I) und

B) 2 bis 95 mol-% Polycyanoaryletherblöcken der Formeln (II) und/oder (III).

3. Hochtemperaturbeständige Blockcopolykondensate nach einem der Ansprüche 1 bis 2, dadurch gekennzeichnet, daß die Polyarylenethersulfonblöcke (A) aufgebaut sind aus mindestens einer der folgenden Einheiten

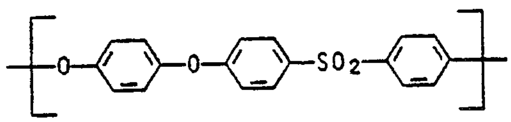

(I1)

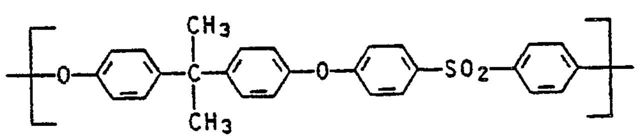

(I2)

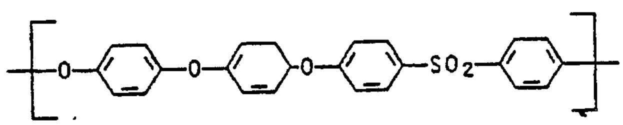

(I3)

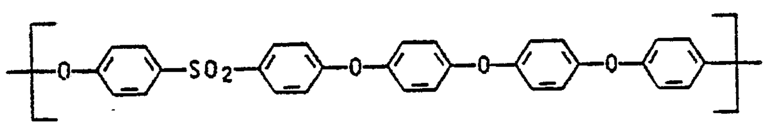

(I4)

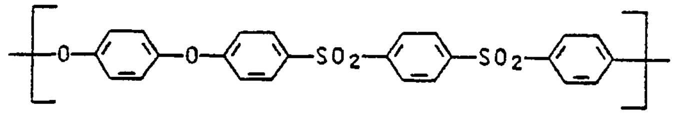

(I5)

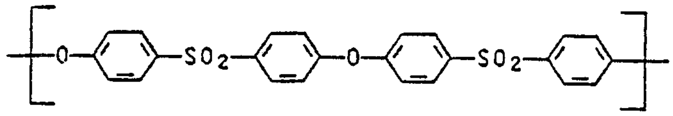

(I6)

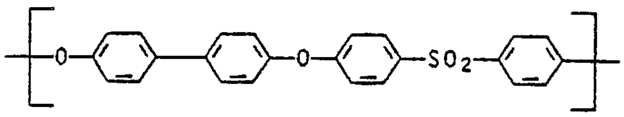

(I7)

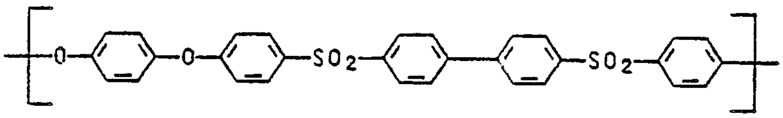

(I8)

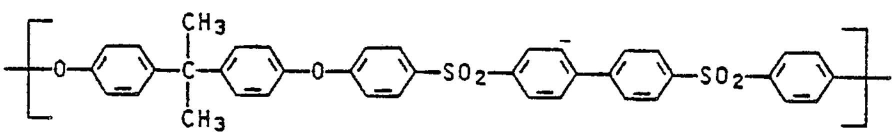

(I9)

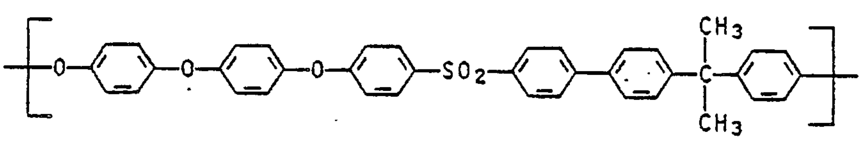

(I10)

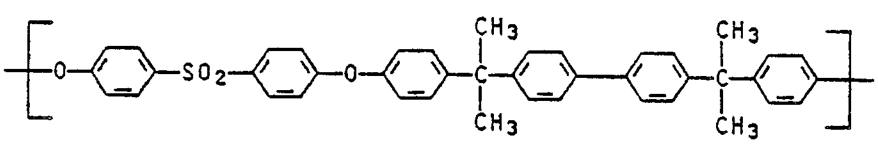

(I11)

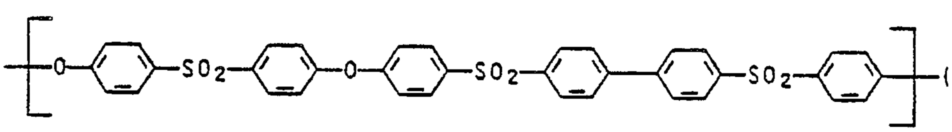

(I12)

4. Hochtemperaturbeständige Blockcopolykondensate nach einem der Ansprüche 1 bis 2, dadurch gekennzeichnet, daß die Polyarylenethersulfonblöcke (A) aufgebaut sind aus Einheiten der Formeln

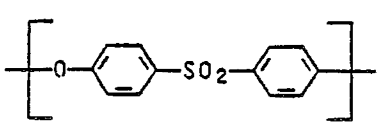

(I6)

und/oder

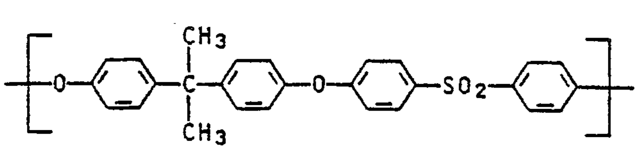

(I2)

wobei die Copolykondensate aus (I6) und (I2) die Einheiten (I6) und (I2) in statischer Verteilung oder in

Form von Blöcken gebunden enthalten.

5. Hochtemperaturbeständige Blockcopolykondensate nach einem der Ansprüche 1 bis 2, dadurch gekennzeichnet, daß die Polycyanoaryletherblöcke (B) aufgebaut sind aus mindestens einer der folgenden Einheiten

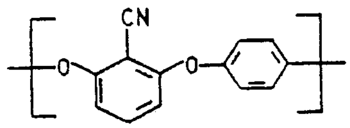

(II1)

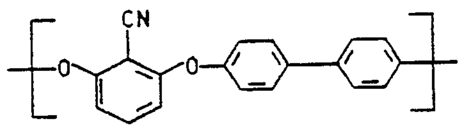

(II2)

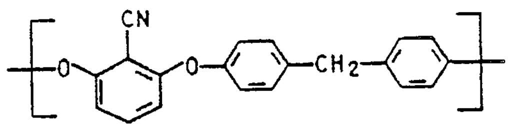

(II3)

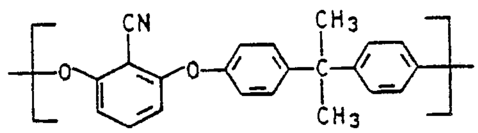

(II4)

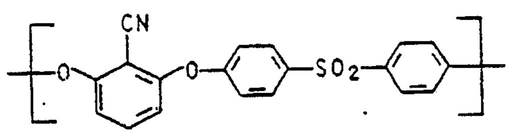

(II5)

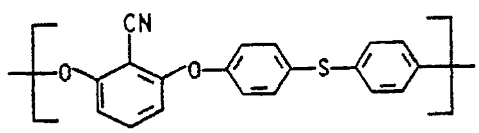

(II6)

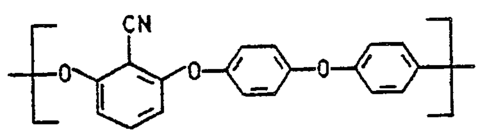

(II7)

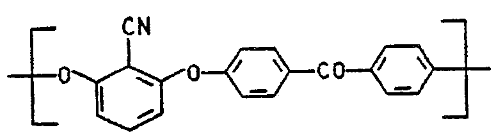

(II8)

oder

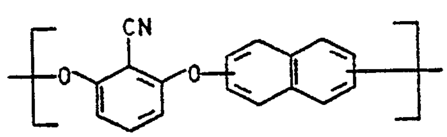

(III)

6. Hochtemperaturbeständige Blockcopolykondensate nach einem der Ansprüche 1 bis 2, dadurch gekennzeichnet, daß die Polycyanoaryletherblöcke (B) aufgebaut sind aus Einheiten der Formel

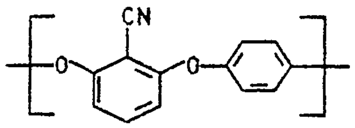

(III)

7. Verfahren zur Herstellung von hochtemperaturbeständigen Blockcopolykondensaten nach Anspruch 1 durch Polykondensation von aromatischen Dihalogenverbindungen und aromatischen Dihydroxyverbindungen in polaren aprotischen Lösungsmitteln in Gegenwart von Alkalimetallcarbonaten, dadurch gekennzeichnet, daß

a) in einer ersten Reaktionsstufe durch Umsetzung von Monomeren der Formeln (Ia) und/oder (Ib)

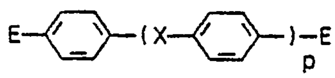

(Ia)

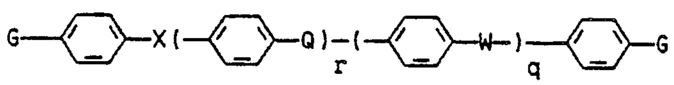

(Ib)

wobei

X, Q, W, p und q die in Anspruch 1 angegebene Bedeutung haben,

r den Wert 0 oder 1 hat und

E und G Hydroxyl, Chlor oder Fluor sind mit der Maßgabe, daß das Verhältnis von Hydroxylendgruppen zu Chlor- und/oder Fluor-Endgruppen im Bereich von 0,8:1 bis 1,2:1 liegt,

Polyarylenethersulfonblöcke (A) hergestellt werden und anschließend

b) in einer zweiten Reaktionsstufe an diese Polycyanoaryletherblöcke (B) ankondensiert werden durch Umsetzung von Cyanodihalogenbenzolen der Formeln

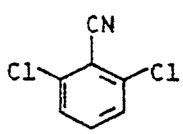

(IV) und/oder

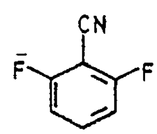

(V)

mit Monomeren der Formel

HO-AR′-OH (VI)

in der bedeutet

AR′ einen Phenylen-, Diphenylen-, Naphthylenrest oder eine Gruppe

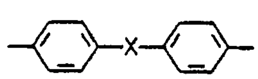

,

in der X ein Brückenglied $-CH_2-$, $-C(CH_3)_2-$, $-SO_2-$, -S-, -O- oder -CO- ist

und das Verhältnis von Hydroxyl- zu Chlor- und/oder Fluorendgruppen im Bereich von 0,8:1 bis 1,2:1 liegt.

8. Verwendung der hochtemperaturbeständigen Blockcopolykondensate nach einem der Ansprüche 1 bis 6 zur Herstellung von Formkörpern.

9. Formkörper, enthaltend hochtemperaturbeständige Blockcopolykondensate nach einem der Ansprüche 1 bis 6.

10. Formkörper, bestehend im wesentlichen aus hochtemperaturbeständigen Blockcopolykondensaten nach einem der Ansprüche 1 bis 6.

Europäisches Patentamt

# EUROPÄISCHER RECHERCHENBERICHT

Nummer der Anmeldung

EP 89 10 4654

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 202 168 (GENERAL ELECTRIC) * Beispiel 4; Seite 22, letzter Absatz * | 1-10 | C 08 G 65/40<br>C 08 G 75/23 |
| D,A | PATENT ABSTRACTS OF JAPAN vol. 9, no. 331 (C-321) (2054), 25. Dezember 1985 & JP - A - 60161428 (IDEMITSU KOSAN K.K.) 23.08.1985 | 1 | |
| D,A | DE-A-3 227 933 (DR. BECK) * Anspruch 1 * | 1 | |
| D,A | EP-A-0 121 257 (UNION CARBIDE) * Ansprüche * | 1,7 | |
| D,A | EP-A-0 192 177 (IDEMITSU KOSAN) * Ansprüche * | 1,7 | |

RECHERCHIERTE SACHGEBIETE (Int. Cl.4)

C 08 G 65/00
C 08 G 75/00

Der vorliegende Recherchenbericht wurde für alle Patentansprüche erstellt

| Recherchenort | Abschlußdatum der Recherche | Prüfer |
|---|---|---|
| BERLIN | 05-07-1989 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)